# EUROPÄISCHE PATENTSCHRIFT

(11) **EP 1 098 949 B1**
(45) Veröffentlichungstag und Bekanntmachung des Hinweises auf die Patenterteilung: **25.09.2002**
(21) Anmeldenummer: 99939996.7
(22) Anmeldetag: 08.07.1999
(51) Int. Cl.: C09K 5/20, C23F 11/16

(54) **GEFRIERSCHUTZMITTELKONZENTRATE UND DIESE ENTHALTENDE KÜHLMITTELZUSAMMENSETZUNGEN FÜR KÜHLKREISLÄUFE IN VERBRENNUNGSMOTOREN**
ANTIFREEZE CONCENTRATES AND COOLANT COMPOSITIONS CONTAINING THESE CONCENTRATES FOR COOLING CIRCUITS IN INTERNAL COMBUSTION ENGINES
ANTIGELS CONCENTRES ET COMPOSITIONS REFRIGERANTES LES CONTENANT, POUR CIRCUITS DE REFROIDISSEMENT DE MOTEURS A COMBUSTION INTERNE

(30) Priorität: 09.07.1998 DE 19830819
(43) Veröffentlichungstag der Anmeldung: 16.05.2001
(73) Patentinhaber: BASF AKTIENGESELLSCHAFT, 67056 Ludwigshafen (DE)
(72) Erfinder: OPPENLÄNDER, Knut, D-67061 Ludwigshafen (DE); GÜNTHER, Wolfgang, D-67582 Mettenheim (DE); PFITZNER, Klaus, D-67063 Ludwigshafen (DE); GILLICH, Michael, D-67112 Mutterstadt (DE); MESZAROS, Ladislaus, D-67069 Ludwigshafen (DE)
(74) Vertreter: Kinzebach, Werner, Dr.
(86) Internationale Anmeldenummer: EP9904819
(87) Internationale Veröffentlichungsnummer: WO00002974

(56) Entgegenhaltungen:
- WO-A-96/18757
- US-A- 4 241 011
- US-A- 5 085 793

## Beschreibung

Die vorliegende Erfindung betrifft neuartige Gefrierschutzmittelkonzentrate auf Alkylenglykolbasis und diese enthaltenden gebrauchsfertigen, wässrigen Kühlmittelzusammensetzungen für Kühlkreisläufe in Verbrennungsmotoren.

Kühlmittel für die Kühlkreisläufe von Verbrennungsmotoren, beispielsweise in Kraftfahrzeugen, enthalten meist Alkylenglykole, insbesondere Ethylenglykol oder Propylenglykol, oder aber auch entsprechende Glykolether. Zur Verwendung im Kühlsystem werden sie mit Wasser verdünnt und tragen neben ihrer Wirkung als Frostschutzmittel durch eine Gefrierpunktserniedrigung des Wassers auch zu einer guten Wärmeabfuhr bei. Alkylenglykol/Wasser-Mischungen sind allerdings bei den Betriebstemperaturen von Verbrennungsmotoren sehr korrosiv. Aus diesem Grund müssen die verschiedenen Metalle, die zur Konstruktion von Kühlsystemen verwendet werden, vor Korrosion geschützt werden.

Die Betriebsbedingungen in modernen Verbrennungsmotoren stellen heute bezüglich Temperaturbelastung an den Wärmeübertragungsflächen, Druck und Fließgeschwindigkeit sowie der Werkstoffauswahl sehr viel höhere Ansprüche an das Korrosionsschutzvermögen des Kühlmittels als früher. Neben den bekannten Werkstoffen wie Kupfer, Messing, Weichlot, Stahl und Grauguss werden auch in zunehmendem Maße, insbesondere aus Gründen der Gewichtsreduktion, Aluminiumlegierungen verwendet. In der neueren Literatur findet man deshalb häufig die Beschreibung bestimmter Kombinationen von an sich lange bekannten Wirksubstanzen, für die jeweils ein spezielles Wirkungsspektrum beansprucht wird.

Zum Schutz des Aluminiums vor Korrosion haben sich insbesondere Alkalimetallsilikate hervorragend bewährt. Sie neigen allerdings dazu, in glykolhaltigen Kühlerschutzmitteln Gele oder sogar Ausfällungen zu bilden, so dass spezielle Silikatstabilisatoren notwendig sind.

Bestandteil derartiger Wirkstoffkombinationen sind z. B. auch Salze organischer Säuren, die insbesondere in Form ihrer Alkalisalze effiziente Korrosionsinhibitoren sind, während die freien Säuren eine verminderte Wirksamkeit besitzen oder sogar korrosiv sein können. Das Auftreten freier Säuren in Kühlerschutzformulierungen, was z. B. durch Oxidationsprozesse oder den Eintrag Nitroser Gase in das Kühlsystem verursacht werden kann, ist deshalb in hohem Maße unerwünscht. Kühlerschutzformulierungen enthalten deshalb geringe Mengen an sogenannten Reservealkalitätsspendern, die aufgrund einer Pufferwirkung im relevanten pH-Bereich die Bildung freier Säuren verhindern. Als Reservealkalitätsspender kommen z. B. Amine oder Phosphate, insbesondere aber das kostengünstigere Borax zur Anwendung. Derartige Korrosionsinhibitorzusammensetzungen sind beispielsweise beschrieben in EP-B-0 229 440 und EP-A-0 308 037.

Aufgrund der beschriebenen Nachteile beim Einsatz von Silikaten als Korrosionsinhibitoren für Aluminium ist bei neueren Entwicklungen eine Tendenz zum Verzicht auf deren Einsatz und zum Ersatz durch andere Wirkstoffe festzustellen. Unter diesen Bedingungen wirkt dann der Reservealkalitätsspender Borax jedoch stark korrosiv, so dass dessen Verwendung nicht mehr möglich ist. Der Gebrauch von Phosphaten ist in modernen Kühlerschutzformulierungen ebenfalls unerwünscht. In noch stärkerem Maße gilt dies für Amine aufgrund ihrer Eigenschaft als potentielle Nitrosaminbildner.

Die US 5,085,793 beschreibt Korrosionsinhibitoren in Kühlerschutzformulierungen, die aromatische Hydroxycarbonsäuren umfassen und besonders zum Schutz bleihaltiger Oberflächen geeignet sind.

Die US 4,241,011 beschreibt Korrosionsschutzmittel für den Korrosionsschutz metallischer Oberflächen, die wasserlösliche Metallsalze von Carboxysiloxanen als Korrosionsinhibitor und Hydroxybenzoesäuren als organische Puffer enthalten.

Die WO-A-96/18757 beschreibt Korrosionsschutzmittel für den temporären Korrosionsschutz metallischer, insbesondere eisenhaltiger Oberflächen. Die darin beschriebenen Korrosionsschutzmittel liegen als wässrige Lösungen vor und umfassen eine Kombination eines Carbonsäureanions mit 6 bis 44 Kohlenstoffatomen mit einer aromatischen Hydroxyverbindung mit einem pKₛ-Wert für die Hydroxygruppe im Bereich von 7,0 bis 11, im Gewichtsverhältnis von 1:2 bis 20:1. Derartige Korrosionsinhibitorsysteme sind jedoch nicht für eine Verwendung in alkylenglykolhaltigen Kühlmittelsystemen für Verbrennungsmotoren vorgesehen. Vielmehr wird deren Verwendung in wässrigen Behandlungsbädern vorgeschlagen, in welche die zu behandelnden Gegenstände, wie z. B. Stahlbleche eingetaucht werden.

Es besteht deshalb weiterhin ein Bedarf an verbesserten Gefrierschutzmittelkonzentraten.

Die der vorliegenden Erfindung zugrunde liegende Aufgabe besteht deshalb darin, neue Reservealkalitätsspender enthaltende, silikatfreie Gefrierschutzmittelkonzentrate bereitzustellen, die die beschriebenen Nachteile nicht aufweisen. Insbesondere sollten die Gefrierschutzmittelkonzentrate eine verbesserte korrosionsinhibierende Wirkung auf Aluminium oder Aluminiumlegierungen zeigen.

Die Aufgabe wurde dadurch gelöst, dass man in üblichen silikatfreien Inhibitorsystemen für alkylenglykolhaltige Kühlerschutzformulierungen die konventionellen Reservealkalitätsspender, wie Borate, Phosphate und Amine, durch eine ein- oder mehrkernige, wenigstens eine Hydroxylgruppe tragende aromatische Verbindung mit einer hohen Pufferkapazität im pH-Bereich von etwa 6 bis 10, ersetzt.

Gegenstand der vorliegenden Erfindung sind somit insbesondere Gefrierschutzmittelkonzentrate, die dadurch gekennzeichnet sind, dass sie
a) wenigstens einen den Gefrierpunkt erniedrigenden, mit Wasser mischbaren Alkohol, vorzugsweise ausgewählt unter Alkylenglykölen und Alkylenglykolethern;
b) wenigstens einen Korrosionsinhibitor; und
c) als Reservealkalitätsspender wenigstens eine Hydroxylgruppe tragende aromatische Verbindung mit einer hohen Pufferkapazität im pH-Bereich von etwa 6 bis 10, die ausgewählt ist unter Verbindungen der Formel III 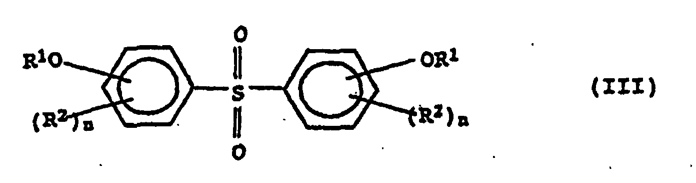
worin
- n: für einen ganzzahligen Wert von 0 bis 4 steht,
- R¹: für Wasserstoff oder ein Alkalimetallion steht, und die Substituenten
- R²: unabhängig voneinander für eine Hydroxyl-, Alkyl-, Hydroxyalkyl-, Heteroalkyl- oder Hydroxyheteroalkylgruppe stehen,
umfassen.

Derartige Gefrierschutzmittelkonzentrate und die damit hergestellten, gebrauchsfertigen Kühlmittelzusammensetzungen zeigen den überraschenden Vorteil, dass sie im Vergleich zu herkömmlichen Formulierungen eins deutlich verbesserte korrosionsinhibierende Wirkung besitzen. Insbesondere beobachtet man eine Verbesserung der Korrosionsstabilität von Aluminium-Werkstoffen, wie sie im Verbrennungsmotorbau verwendet werden.

In Verbindungen der Formel III steht R¹ vorzugsweise für Wasserstoff, n steht vorzugsweise für 0, 1 oder 2 und R² steht, falls vorhanden, vorzugsweise für Hydroxy oder Hydroxyalkyl. Vorzugsweise sind Verbindungen der Formel III symmetrisch aufgebaut, d. h., die beiden aromatischen Ringe sind, ausgehend von der zentralen SO₂-Gruppe spiegelsymmetrisch substituiert.

Insbesondere bevorzugt sind Verbindungen der Formel III, worin die Reste R¹ gleich sind und für Wasserstoff oder ein Alkalimetall stehen und n jeweils für 0 steht. Konkrete Beispiele für solche Verbindungen sind 4,4'-Dihydroxydiphenylsulfon (Bisphenol S) und die entsprechenden Stellungsisomere sowie Mischungen dieser Verbindungen.

Steht R¹ in den oben genannten Verbindungen der Formel III nicht für Wasserstoff, tritt an dessen Stelle ein vorzugsweise einwertiges Metallkation, insbesondere ein Alkalimetallkation, wie z. B. ein Natrium- oder Kaliumkation. Liegen mehrere Reste R¹ vor, so stehen diese vorzugsweise für das gleiche Alkalimetallkation.

Erfindungsgemäß geeignete Alkylreste sind geradkettige oder verzweigte Kohlenstoffketten mit 1 bis 10, vorzugsweise 1 bis 6, insbesondere 1 bis 4 Kohlenstoffatomen. Beispielsweise können folgende Reste genannt werden: Methyl, Ethyl, n-Propyl, i-Propyl, n-Butyl, sec-Butyl, i-Butyl, t-Butyl, n-Pentyl, sec-Pentyl, Isopentyl, n-Hexyl, 1-, 2- oder 3-Methyl-pentyl sowie längerkettige Alkylreste, wie unverzweigtes Heptyl, Octyl, Nonyl und Decyl sowie die ein- oder mehrfach verzweigten Analoga davon.

Erfindungsgemäß geeignete Hydroxyalkylreste sind vorzugsweise hydroxylgruppenhaltige Alkylreste gemäß obiger Definition. Sie können 1 bis 10, vorzugsweise 1 bis 3, insbesondere 1 Hydroxylgruppe enthalten, wobei vorzugsweise wenigstens eine Hydroxylgruppe endständig, d. h. an ein primäres Kohlenstoffatom gebunden ist.

Erfindungsgemäß brauchbare Heteroalkylreste sind Alkylgruppen gemäß obiger Definition, wobei wenigstens ein Heteroatom, ausgewählt unter S, N und O, vorzugsweise O, in der Alkylkette enthalten ist. Beispiele für besonders bevorzugte Heteroalkylgruppen sind Methoxymethyl- oder Ethoxyethylgruppen.

Erfindungsgemäß brauchbare Hydroxyheteroalkylgruppen sind Heteroalkylgruppen gemäß obiger Definition, wobei wenigstens 1 bis 10, wie z. B. 1 bis 3, insbesondere 1 Hydroxylgruppe, an die Heteroalkylkette gebunden sind. Als Beispiele für derartige Reste können genannt werden: Hydroxyethyloxyethyl oder Hydroxymethyloxymethyl.

Oben genannte erfindungsgemäße Alkyl-, Hydroxyalkyl-, Heteroalkyl- oder Hydroxyheteroalkylgruppen können gegebenenfalls auch über ein Heteroatom, vorzugsweise ein Sauerstoffatom, an den aromatischen Ring gebunden sein.

Gemäß einer weiteren bevorzugten Ausführungsform der Erfindung weisen die Gefrierschutzmittelkonzentrate als Korrosionsinhibitor wenigstens eine Verbindung auf, die ausgewählt ist unter Triazolen, Thiazolen und ein- oder mehrbasischen, aliphatischen oder aromatischen Carbonsäuren oder Carbonsäuresalzen, und Gemischen dieser Verbindungen.

Beispiele für erfindungsgemäß brauchbare Triazole und Thiazole sind Derivate dieser Verbindungen, welche ein kondensiertes, vorzugsweise aromatisches Ringsystem aufweisen. Insbesondere sind zu nennen: Benzotriazol, Benzothiazol, Toluthiazol und Tolutriazol.

Oben genannte Thiazole und Triazole können einzeln oder im Gemisch in den erfindungsgemäßen Gefrierschutzmittelkonzentraten enthalten sein. Außerdem können sie im Gemisch mit wenigstens einer Carbonsäure des oben genannten Typs vorliegen.

Erfindungsgemäß geeignete Carbonsäuren sind beispielsweise geradkettige oder verzweigte aliphatische Monocarbonsäuren mit 5 bis 12 Kohlenstoffatomen, wie z. B. Pentansäure, Hexansäure, Octansäure, Nonansäure, Decansäure, Undecansäure, Dodecansäure, 2-Ethylhexansäure und Isononansäure.

Erfindungsgemäß geeignete aromatische Monocarbonsäuren sind insbesondere solche mit 7 bis 16 Kohlenstoffatomen. Als Beispiele können genannt werden: Benzoesäure, Alkylbenzoesäuren, wobei der Alkylteil wie oben definiert ist, wie z. B. o-, m- und p-Methylbenzoesäure, sowie hydroxylgruppenhaltige Analoga obiger aromatischer Monocarbonsäuren, wie z. B. o-, m- oder p-Hydroxybenzoesäure oder o-, m- oder p-(Hydroxymethyl)benzoesäure.

Die oben genannten erfindungsgemäß einsetzbaren Carbonsäuren können gegebenenfalls zusätzlich substituiert sein mit Ethersauerstoff-haltigen Gruppen, wie z. B. Alkyloxyalkyl-Gruppen, oder Carbonylfunktionen enthaltenden Gruppen, wie Alkylcarbonylgruppen, wobei der Alkylteil jeweils wie oben definiert ist.

Die erfindungsgemäß brauchbaren Carbonsäuren können einzeln oder im Gemisch den erfindungsgemäßen Gefrierschutzmittelkonzentraten zugesetzt werden. Besonders bevorzugt sind Mischungen aus mindestens zwei Carbonsäuren des oben genannten Typs. Vorzugsweise sind zwei Carbonsäuren im molaren Verhältnis von etwa 1:99 bis 99:1, insbesondere 3:97 bis 97:1 enthalten. Besonders bevorzugt ist ein Gemisch aus zwei Dicarbonsäuren, insbesondere zwei aliphatischen Dicarbonsäuren, bzw. deren Salzen, insbesondere Alkalimetallsalzen, wie z. B. Natrium- oder Kaliumsalzen.

Weitere erfindungsgemäß brauchbare Carbonsäuregemische umfassen eine Mischung aus zwei Monocarbonsäuren, insbesondere einer aliphatischen und einer aromatischen Monocarbonsäure; oder Mischungen aus einer Monocarbonsäure und einer Dicarbonsäure, insbesondere aus einer aliphatischen Dicarbonsäure und einer verzweigten aliphatischen Monocarbonsäure.

Als konkretes Beispiel für ein erfindungsgemäß brauchbares Carbonsäuregemisch ist zu nennen ein Gemisch aus Sebacinsäure und Adipinsäure.

Erfindungsgemäß geeignete Gemische aus Carbonsäuren und Triazol- bzw. Thiazolverbindungen sind in der älteren EP-A-0 816 467 beschrieben, worauf hiermit ausdrücklich Bezug genommen wird. Geeignete Gemische umfassen beispielsweise wenigstens eine Carbonsäure des oben bezeichneten Typs und wenigstens ein Thiazol oder Triazol des oben bezeichneten Typs in einem mengenmäßigen Verhältnis von etwa 1:20 bis etwa 20:1, insbesondere etwa 1:15 bis etwa 15:1.

Die erfindungsgemäßen Gefrierschutzmittelkonzentrate enthalten den oder die Reservealkalitätsspender der obigen Formel III gewöhnlich in einem Anteil von etwa 0,05 bis 4 Gew.-%, vorzugsweise etwa 0,5 bis 3 Gew.-%, insbesondere etwa 0,8 bis 2 Gew.-%.

Die oben genannten Korrosionsinhibitoren, d. h. Carbonsäuren, Thiazole und/oder Triazole, sind gewöhnlich in einem Gesamtanteil von etwa 0,1 bis 20 Gew.-%, insbesondere 0,5 bis 10 Gew.-%, bezogen auf das Gesamtgewicht des Konzentrates, enthalten. Dabei können die Carbonsäuren des oben bezeichneten Typs in einem Anteil von etwa 0,05 bis 10 Gew.-%, vorzugsweise 0,1 bis 5 Gew.-%, bezogen auf das Gesamtgewicht des Konzentrates, enthalten sein. Triazole und/oder Thiazole sind gewöhnlich in einem Anteil von 0,01 bis 3 Gew.-%, vorzugsweise 0,05 bis 1 Gew.-%, bezogen auf das Gesamtgewicht des Konzentrates, enthalten.

Die erfindungsgemäßen Gefrierschutzmittelkonzentrate können als zusätzliche Korrosionsinhibitoren bis zu 2 Gew.-%, insbesondere 0,001 bis 1 Gew.-%, bezogen auf das Gesamtgewicht des Konzentrates, mindestens eines quaternisierten Imidazols enthalten. Derartige quaternisierte Imidazole sind in der DE-A-196 05 509 beschrieben. Beispiele hierfür sind mit Benzylchlorid, Benzylbromid, Methylchlorid, Methylbromid, Ethylchlorid, Ethylbromid, Diethylsulfat oder insbesondere Dimethylsulfat quaternisiertes 1-Methylimidazol, 1-Ethylimidazol, 1-(β-Hydroxyethyl)imidazol, 1,2-Dimethylimidazol, 1-Phenylimidazol, Benzimidazol und insbesondere N-Vinylimidazol.

Die erfindungsgemäßen Gefrierschutzmittelkonzentrate können als weitere zusätzliche Korrosionsinhibitoren bis zu 2 Gew.-%, insbesondere 0,001 bis 1 Gew.-%, bezogen auf das Gesamtgewicht des Konzentrates, mindestens eines löslichen Magnesiumsalzes von organischen Säuren, insbesondere von Carbonsäuren, enthalten. Beispiele für solche Magnesiumsalze sind Magnesiumbenzolsulfonat, Magnesiummethansulfonat, Magnesiumacetat und Magnesiumpropionat. Zusätzlich zu den genannten Inhibitorkomponenten können beispielsweise auch noch Hydrocarbazole in üblichen Mengen eingesetzt werden.

Die erfindungsgemäßen Gefrierschutzmittelkonzentrate können weiterhin zusätzlich bis zu 1 Gew.-%, insbesondere 0,01 bis 0,5 Gew.-%, bezogen auf die Gesamtmenge des Konzentrates, Hartwasserstabilisatoren auf Basis von Polyacrylsäure, Polymaleinsäure, Acrylsäure-Haleinsäure-Copolymere, Polyvinylpyrrolidon, Polyvinylimidazol, Vinylpyrrolidon-Vinylimidazol-Copolymeren und/oder Copolymeren aus ungesättigten Carbonsäuren und Olefinen enthalten.

Der pH-Wert der erfindungsgemäßen Gefrierschutzmittelkonzentrate liegt üblicherweise im Bereich von 7 bis 10, vorzugsweise 7,5 bis 9,5, insbesondere 8,0 bis 9,5. Dabei wird der gewünschte pH-Wert in der Regel durch Zugabe von Alkalimetallhydroxid, Ammoniak oder Aminen zur Formulierung eingestellt, wobei festes Natrium- und Kaliumhydroxid sowie wässrige Natron- und Kalilauge hierfür besonders geeignet sind.

Die aliphatischen oder aromatischen Mono- und/oder Dicarbonsäuren werden zweckmäßigerweise gleich als entsprechende Alkalimetallsalze zugegeben, um automatisch im gewünschten pH-Bereich zu liegen. Man kann diese Carbonsäuren aber auch als freie Säuren zufügen und dann mit Alkalimetallhydroxid, Ammoniak oder Aminen neutralisieren und den gewünschten pH-Bereich einstellen. Entsprechendes gilt für die Reservealkalitätsspender der Formel III, welche als Alkohol oder in Form der entsprechenden Alkalimetallsalze eingesetzt werden können. Eine partielle Überführung der Verbindungen in ihre Salze ist ebenfalls denkbar.

Als flüssigalkoholisches Gefrierpunktserniedrigungsmittel, welches normalerweise den Hauptbestandteil (in der Regel mindestens etwa 80 Gew.-%, insbesondere mindestens etwa 90 Gew.%) der erfindungsgemäßen Gefrierschutzmittelkonzentrate ausmacht, eignen sich Alkylenglykole oder deren Derivate, insbesondere Propylenglykol und vor allem Ethylenglykol. Daneben kommen jedoch auch noch höhere Glykole und Glykolether in Betracht, z. B. Diethylenglykol, Dipropylenglykol sowie Monoether von Glykolen, wie der Methyl-, Ethyl-, Propyl- und Butylether von Ethylenglykol, Propylenglykol, Diethylenglykol und Dipropylenglykol. Es können auch Mischungen der genannten Glykole und Glykolether verwendet werden. Bevorzugt sind Ethylenglykol allein oder Mischungen von Alkylenglykolen, also Ethylenglykol, Propylenglykol, höheren Glykolen und/oder Glykolethern, die mindestens 95 Gew.-% Ethylenglykol enthalten.

Die vorliegende Erfindung betrifft außerdem gebrauchsfertige, wässrige Kühlmittelzusammensetzungen mit einem erniedrigten Gefrierpunkt insbesondere für den Kühlerschutz im Automobilbereich, welche Wasser und 10 bis 90 Gew.-%, vorzugsweise 20 bis 60 Gew.-% der erfindungsgemäßen silikat- und boratfreien Gefrierschutzmittelkonzentrate umfassen.

Ein weiterer Gegenstand der vorliegenden. Erfindung betrifft die Verwendung von Verbindungen der Formel III als Reservealkalitätsspender in Kühlmittelzusammensetzungen auf Alkylenglykol- oder Alkylenglykolether-Basis, wobei diese Kühlmittelzusammensetzungen im Wesentlichen silikat- und boratfrei sind.

Die vorliegende Erfindung wird nun anhand der folgenden Beispiele näher erläutert.

### Beispiele

a) Es werden die in Tabelle 1 beschriebenen erfindungsgemäßen Gefrierschutzmittelkonzentrate 2, 3 und 4 sowie die Vergleichskonzentrate V1, V5, V6 und V7 hergestellt und auf ihre Korrosionsschutzwirkung überprüft. Die Versuchsdaten sind in beiliegender Tabelle 2 zusammengefasst.

**Tabelle 1:**

| Zusammensetzung der verwendeten Gefrierschutzmittelkonzentrate | | | | | | | |
|---|---|---|---|---|---|---|---|
| Beispiel | V1 | 2 | 3 | 4 | V5 | V6 | V7 |
| Monoethylenglykol | 93,32³⁾ | 91,78 | 91,98 | 91,37 | 91,89 | 92,79 | 93,33 |
| NaOH, 50%ig | 2,98 | 3,52 | 3,32 | 3,43 | 3,41 | 2,61 | - |
| KOH, 50%ig | - | - | - | - | - | - | 2,97 |
| Sebacinsäure¹⁾ | 2,8 | 2,8 | 2,8 | 2,8 | 2,8 | 1,4 | 0,25 |
| Adipinsäure²⁾ | 0,7 | 0,7 | 0,7 | 0,7 | 0,7 | - | - |
| 2-Ethylhexansäure | - | - | - | - | - | - | 3,25 |
| Isononansäure | - | - | - | - | - | 3,0 | - |
| Tolutriazol | 0,2 | 0,2 | 0,2 | 0,2 | 0,2 | 0,2 | 0,2 |
| 4,4'-Dihydroxydiphenylsulfon | - | 1,0 | 1,0 | 1,5 | - | - | - |
| Borax | - | - | - | - | 1,0 | - | - |
| Summe | 100,00 | 100,00 | 100,00 | 100,00 | 100,00 | 100,00 | 100,00 |

| | | | | | | | |
|---|---|---|---|---|---|---|---|
| 1) HO₂C-(CH₂)₈-CO₂H | | | | | | | |
| 2) HO₂C-(CH₂)₄-CO₂H | | | | | | | |
| 3) Gewichtsteile | | | | | | | |

**Tabelle 2:**

| Technische Daten und Prüfergebnisse | | | | | | | |
|---|---|---|---|---|---|---|---|
| Beispiel | V1 | 2 | 3 | 4 | V5 | V6 | V7 |
| pH-Wert Konzentrat | 8,5 | 9,1 | 8,5 | 8,5 | 8,5 | 8,3 | 8,4 |
| pH-Wert 33 vol.-%ig | 8,1 | 8,6 | 8,1 | 8,0 | 9,1 | 8,1 | 8,1 |
| Reserve-alkalität¹⁾ | | | | | | | |
| bis pH 7,0 | 0,5²⁾ | 6,9 | 3,5 | 5,0 | 11,5 | 0,5 | 0,3 |
| bis pH 5,5 | 9,5 | 15,5 | 13,0 | 16,5 | 21,0 | 8,0 | 5,2 |
| Korrosionsprüfung³⁾ | | | | | | | |
| Kupfer | ±0,00⁴⁾ | +0,02 | -0,04 | -0,01 | ±0,00 | -0,01 | ±0,00 |
| Weichlot | -0,02 | +0,01 | -0,05 | -0,04 | -0,19 | -0,02 | -0,07 |
| Messing | -0,10 | +0,02 | -0,02 | -0,03 | -0,01 | +0,01 | ±0,00 |
| Stahl | -0,10 | +0,06 | -0,02 | -0,03 | +0,03 | +0,04 | ±0,00 |
| Grauguss | +0,08 | +0,09 | -0,06 | +0,01 | +0,06 | +0,09 | +0,04 |
| Gussaluminium | -0,28 | -0,19 | -0,19 | -0,19 | -1,01 | -0,46 | -0,32 |
| Heißkorrosionstest⁵⁾AlSi₁₀Mg | -26,4⁶⁾ | -43,6 | -23,1 | -25,1 | -1657,7 | -52,8 | -42,7 |

| | | | | | | | |
|---|---|---|---|---|---|---|---|
| ¹⁾ gemäß ASTM D 1121 (von 10 ml Konzentrat) | | | | | | | |
| ²⁾ Verbrauchte Menge (ml) von 0,1 N HCl | | | | | | | |
| ³⁾ gemäß ASTM D 1384 für 33 vol.-%ige Lösung in H₂O | | | | | | | |
| ⁴⁾ Gewichtsveränderung in mg/cm² | | | | | | | |
| ⁵⁾ gemäß MTU; für 20 vol.-%ige Lösung in H₂O | | | | | | | |
| ⁶⁾ Gewichtsänderung in mg/Probe | | | | | | | |

Die in Tabelle 2 zusammengestellten Ergebnisse aus der Bestimmung der Reservealkalität nach ASTM D 1121 zeigen deutlich die Wirksamkeit des erfindungsgemäß eingesetzten Additivs Dihydroxydiphenylsulfon. Zwar wird die Wirksamkeit von Borax (Beispiel 5) nicht ganz erreicht, im Vergleich zu den nicht erfindungsgemäß additivierten Formulierungen (Beispiele 1, 6, 7) wird jedoch eine hervorragende Performance erzielt.
Die Korrosionsprüfungen gemäß ASTM D 1384 veranschaulichen, dass die erfindungsgemäße Additivierung der Kühlerschutzformulierungen sich nicht negativ auf das Korrosionsverhalten auswirkt, sondern sogar im Falle von Gussaluminium eine leichte Verbesserung erzielt werden kann.
Tabelle 2 zeigt weiterhin Ergebnisse aus Versuchen, die aus dem dynamischen Heißkammerkorrosionstest nach MTU (Motorenund Turbinenunion), einer Prüfung mit erhöhter Temperaturbelastung, erhalten wurden. Hier wird eine sehr hohe Korrosionsrate für die boraxhaltige Formulierung 5 gefunden, während für die erfindungsgemäßen Formulierungen, insbesondere in den Beispielen 3 und 4, deutlich niedrigere Werte gefunden werden.
b) Für die folgende Testreihe wurde ein Wirkstoffkonzentrat gemäß Beispiel 7 der WO-A-96/18757 hergestellt (Monoethylenglykol 50,1 Teile, 50%ige Kalilauge 24,9 Teile, Sorbinsäure 20 Teile und Bisphenol S 5 Teile) und in einem Korrosionstest nach ASTM D1384 untersucht. Dazu wurde eine 33%ige (V/V) Lösung des Gemischs in destilliertem Wasser hergestellt und mit 0,05 Gewichtsteilen Tolutriazol versetzt. Die Versuchsergebnisse sind in folgender Tabelle 3 zusammengefasst.

**Tabelle 3:**

| ASTM D1384 - Ergebnis | |
|---|---|
| Metalle | Gewichtsänderungen mg/cm² |
| Kupfer | -0,15 |
| Weichlot | -0,83 |
| Messing | -0,31 |
| Stahl | -0,01 |
| Grauguss | +0,03 |
| Gussaluminium | -1,24 |

Die Ergebnisse zeigen, dass, basierend auf einer Zusammensetzung gemäß WO-A-96/18757 keine zufriedenstellende Korrosionsschutzwirkung erzielbar ist.

## Patentansprüche

1. Gefrierschutzmittelkonzentrat, umfassend
a) wenigstens einen den Gefrierpunkt erniedrigenden, mit Wasser mischbaren Alkohol;
b) wenigstens einen Korrosionsinhibitor; und
c) als Reservealkalitätsspender wenigstens eine Hydroxylgruppe tragende aromatische Verbindung mit einer hohen Pufferkapazität im pH-Bereich von etwa 6 bis 10, die ausgewählt ist unter Verbindungen der Formel III 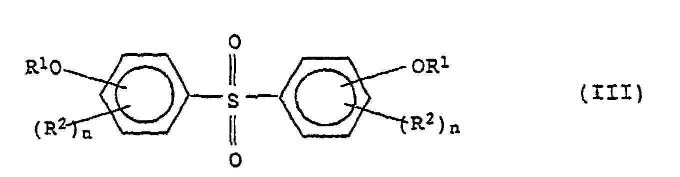
worin
n für einen ganzzahligen Wert von 0 bis 4 steht,
R¹ für Wasserstoff oder ein Alkalimetallion steht, und die Substituenten
R² unabhängig voneinander für eine Hydroxyl-, Alkyl-, Hydroxyalkyl-, Heteroalkyl- oder Hydroxyheteroalkylgruppe stehen.

2. Gefrierschutzmittelkonzentrat nach Anspruch 1, **dadurch gekennzeichnet, dass** der Reservealkalitätsspender ausgewählt ist unter 4,4'- und 2,4'-Dihydroxydiphenylsulfon und Gemischen davon.

3. Gefrierschutzmittelkonzentrat nach einem der vorhergehenden Ansprüche, **dadurch gekennzeichnet, dass** es, bezogen auf das Gesamtgewicht des Konzentrates, wenigstens einen Reservealkalitätsspender der Formel III in einen Anteil von etwa 0,05 bis 4 Gew.-% enthält.

4. Gefrierschutzmittelkonzentrat nach einem der vorhergehenden Ansprüche, **dadurch gekennzeichnet, dass** der Korrosionsinhibitor ausgewählt ist unter Triazolen, Thiazolen und ein- oder mehrbasischen, aliphatischen oder aromatischen Carbonsäuren oder deren Salzen, und Gemische dieser Verbindungen.

5. Gefrierschutzmittelkonzentrat nach Anspruch 4, **dadurch gekennzeichnet, dass** es wenigstens einen Korrosionsinhibitor in einem Anteil von etwa 0,1 bis 20 Gew.-%, bezogen auf das Gesamtgewicht des Konzentrats, enthält.

6. Gefrierschutzmittelkonzentrat nach einem der vorhergehenden Ansprüche, **dadurch gekennzeichnet, dass** der den Gefrierpunkt erniedrigende Alkohol ausgewählt ist unter Alkylenglykolen und Alkylenglykolethern und Gemischen davon.

7. Gefrierschutzmittelkonzentrat nach einem der vorhergehenden Ansprüche, **dadurch gekennzeichnet, dass** es im Wesentlichen borat- und silikatfrei ist.

8. Kühlmittelzusammensetzung, enthaltend ein Gefrierschutzmittelkonzentrat nach einem der vorhergehenden Ansprüche.

9. Verwendung einer Verbindung der Formel III als Reservealkalitätsspender in Kühlmittelzusammensetzungen auf Alkylenglykoloder Alkylenglykolether-Basis.

10. Verwendung nach Anspruch 9, **dadurch gekennzeichnet, dass** die Kühlmittelzusammensetzung außerdem im Wesentlichen borat- und silikatfrei ist.

## Claims

1. An antifreeze concentrate comprising
a) at least one water-miscible alcohol which lowers the freezing point;
b) at least one corrosion inhibitor; and
c) as reserve alkalinity donor, at least one hydroxyl-bearing aromatic compound which has a high buffer capacity in the pH range from about 6 to 10, which reserve alkalinity donor is selected from compounds of the formula III 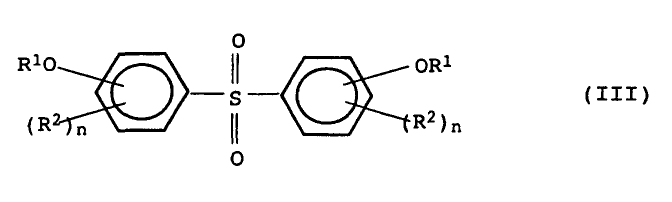
where
n is an integer from 0 to 4,
R¹ is hydrogen or an alkali metal ion, and the substituents
R² independently of one another are a hydroxyl, alkyl, hydroxyalkyl, heteroalkyl or hydroxyheteroalkyl group.

2. An antifreeze concentrate as claimed in claim 1, wherein the reserve alkalinity donor is selected from 4,4'- and 2,4'-dihydroxydiphenyl sulfone and mixtures thereof.

3. An antifreeze concentrate as claimed in either one of the preceding claims, which comprises at least one reserve alkalinity donor of the formula III in a proportion of from about 0.05 to 4% by weight, based on the overall weight of the concentrate.

4. An antifreeze concentrate as claimed in any one of the preceding claims, wherein the corrosion inhibitor is selected from triazoles, thiazoles and mono- or polybasic, aliphatic or aromatic carboxylic acids and their salts, and mixtures of these compounds.

5. An antifreeze concentrate as claimed in claim 4, which comprises at least one corrosion inhibitor in a proportion of from about 0.1 to 20% by weight, based on the overall weight of the concentrate.

6. An antifreeze concentrate as claimed in any one of the preceding claims, wherein the alcohol which lowers the freezing point is selected from alkylene glycols and alkylene glycol ethers, and mixtures thereof.

7. An antifreeze concentrate as claimed in any one of the preceding claims, which is essentially free from borate and silicate.

8. A coolant composition comprising an antifreeze concentrate as claimed in any one of the preceding claims.

9. The use of a compound of the formula III as a reserve alkalinity donor in a coolant composition based on alkylene glycols or alkylene glycol ethers.

10. The use as claimed in claim 9, wherein the coolant composition, moreover, is essentially free from borate and silicate.

## Revendications

1. Antigel concentré contenant
a) au moins un alcool qui est miscible avec l'eau et qui abaisse le point de congélation;
b) au moins un agent anticorrosif; et
c) un composé aromatique qui présente au moins un groupe hydroxyle et un effet tampon élevé dans la plage de pH d'environ 6 à 10, en tant que générateur d'alcalinité de réserve, composé qui est choisi parmi les composés de formule III 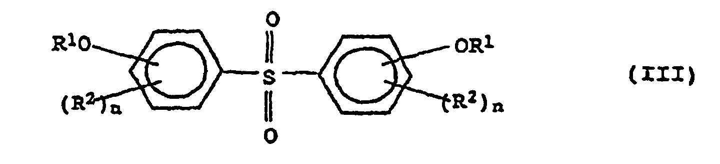
dans laquelle
n représente un nombre entier de 0 à 4,
R¹ représente un atome d'hydrogène ou un ion de métal alcalin, et
R² représentent, indépendamment l'un de l'autre, un groupe hydroxyle, alkyle, hydroxyalkyle, hétéroalkyle ou hydroxyhétéroalkyle.

2. Antigel concentré selon la revendication 1, **caractérisé en ce que** l'on choisit le générateur d'alcalinité de réserve dans le groupe formé par la 4,4'-dihydroxydiphénylsulfone et la 2,4'-dihydroxydiphénylsulfone et leurs mélanges.

3. Antigel concentré selon l'une quelconque des revendications précédentes, **caractérisé en ce qu'**il contient au moins un générateur d'alcalinité de réserve de formule III à raison d'environ 0,05% à 4% en poids par rapport au poids total du concentré.

4. Antigel concentré selon l'une quelconque des revendications précédentes, **caractérisé en ce que** l'on choisit l'agent anticorrosif dans le groupe formé par les triazoles, les thiazoles et les acides carboxyliques monobasiques ou polybasiques, aliphatiques ou aromatiques ou bien leurs sels et les mélanges de ces composés.

5. Antigel concentré selon la revendication 4, **caractérisé en ce qu'**il contient au moins un agent anticorrosif à raison d'environ 0,1% à 20% en poids par rapport au poids total du concentré.

6. Antigel concentré selon l'une quelconque des revendications précédentes, **caractérisé en ce que** l'on choisit l'alcool qui diminue le point de congélation dans le groupe formé par les alcène-glycols et les éthers d'alcène-glycol et leurs mélanges.

7. Antigel concentré selon l'une quelconque des revendications précédentes, **caractérisé en ce qu'**il est essentiellement exempt de borate et de silicate.

8. Composition réfrigérante contenant un antigel concentré selon l'une quelconque des revendications précédentes.

9. Mise en oeuvre du composé de formule III en tant que générateur d'alcalinité de réserve dans les compositions réfrigérantes à base d'alcène-glycol ou d'éther d'alcène-glycol.

10. Mise en oeuvre selon la revendication 9 **caractérisée en ce qu'**en plus la composition réfrigérante est essentiellement exempte de borate et de silicate.
